(19) Europäisches Patentamt / European Patent Office / Office européen des brevets

(11) **EP 2 656 535 B1**

# (12) EUROPÄISCHE PATENTSCHRIFT

(45) Veröffentlichungstag und Bekanntmachung des Hinweises auf die Patenterteilung:
**26.08.2020 Patentblatt 2020/35**

(51) Int Cl.:
*H04L 9/08* (2006.01)     *H04L 9/32* (2006.01)
*H04L 29/06* (2006.01)

(21) Anmeldenummer: **11802651.7**

(22) Anmeldetag: **21.12.2011**

(86) Internationale Anmeldenummer:
**PCT/EP2011/006491**

(87) Internationale Veröffentlichungsnummer:
**WO 2012/084241 (28.06.2012 Gazette 2012/26)**

(54) **KRYPTOGRAPHISCHES VERFAHREN**

CRYPTOGRAPHIC METHOD

PROCÉDÉ CRYPTOGRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010055699**

(43) Veröffentlichungstag der Anmeldung:
**30.10.2013 Patentblatt 2013/44**

(73) Patentinhaber: **Giesecke+Devrient Mobile Security GmbH**
**81677 München (DE)**

(72) Erfinder: **MEISTER, Gisela**
**81737 München (DE)**

(56) Entgegenhaltungen:
**US-A1- 2008 022 121     US-A1- 2008 301 461**

**Beschreibung**

Die vorliegende Erfindung betrifft ein kryptographisches Verfahren zwischen einem portablen Datenträger und einer Terminaleinrichtung sowie einen entsprechend eingerichteten Datenträger und eine Terminaleinrichtung.

Ein portabler Datenträger, beispielsweise in Form eines elektronischen Ausweisdokuments, umfasst einen integrierten Schaltkreis mit einem Prozessor und einem Speicher. In dem Speicher sind einen Nutzer des Datenträgers betreffende Daten gespeichert. Auf dem Prozessor ist eine Kryptographieapplikation ausführbar, über welche der Datenträger eine gesicherte Kommunikationsverbindung zu der Terminaleinrichtung aufbauen kann. Weiterhin kann die Kryptographieeinrichtung eine Authentisierung des Datenträgers gegenüber der Terminaleinrichtung unterstützen, im Fall eines Ausweisdokuments beispielsweise bei einer Grenzkontrolle oder dergleichen.

Während eines solchen kryptographischen Verfahrens wird eine gesicherte Datenkommunikation zwischen dem Datenträger und der Terminaleinrichtung vorbereitet, indem ein geheimer Kommunikationsschlüssel zur symmetrischen Verschlüsselung einer nachfolgenden Datenkommunikation vereinbart wird, beispielsweise mittels des bekannten Schlüsselaustauschverfahrens nach Diffie und Hellman oder anderen geeigneten Verfahren. Weiterhin verifiziert in der Regel zumindest die Terminaleinrichtung die Authentizität des Datenträgers, beispielsweise anhand eines Zertifikats.

Zur Durchführung eines Verfahrens zur Vereinbarung des geheimen Kommunikationsschlüssels ist es notwendig, dass sowohl das Terminal als auch der Datenträger jeweils einen geheimen Schlüssel und einen öffentlichen Schlüssel bereitstellen. Das Zertifikat des Datenträgers kann beispielsweise dessen öffentlichen Schlüssel betreffen.

Es sind verschiedene Verfahren und Protokolle bekannt, welche den Aufbau einer sicheren Kommunikationsverbindung zwischen einem portablen Datenträger und einer Terminaleinrichtung unterstützen. Ein auf sitzungsspezifisch dynamisch generierten Schlüsseln basierendes Schlüsselaustauschverfahren kann zusätzlich passwortbasiert gesichert sein. Als Passwort kann ein Geheimdatum, beispielsweise eine PIN, ein biometrisches Merkmal, z.B. ein Fingerabdruck, oder dergleichen, dienen. Das Passwort ist in der Regel einerseits in dem Datenträger gespeichert und wird andererseits der Terminaleinrichtung im Laufe des Verfahrens in geeigneter Weise bereitgestellt. Das Passwort kann z.B. durch einen Nutzer des Datenträgers mittels einer Eingabeeinrichtung in die Terminaleinrichtung eingegeben werden, beispielsweise mittels einer Tastatur, eines Sensors für biometrische Daten oder dergleichen. Gemäß einer anderen Ausführungsform kann das Passwort, beispielsweise eine PIN, auf dem Datenträger optisch auslesbar aufgebracht sein und von der Terminaleinrichtung entsprechend aufgenommen werden. Damit ist sichergestellt, dass ein legitimer Nutzer des Datenträgers die Nutzung des Datenträgers im Rahmen des Verfahrens billigt, indem er das Passwort eingibt oder zumindest den Datenträger derart präsentiert, dass das Passwort von der Terminaleinrichtung ausgelesen werden kann. Eine unerwünschte Datenkommunikation, beispielsweise auf kontaktlosem Weg, kann damit ausgeschlossen werden. Ein solches Verfahren ermöglicht allerdings nicht eine gegenseitige Authentisierung von Datenträger und Terminal.

US 20080022121 A1 beschreibt ein Verfahren zur sicheren Übertragung eines geheimen Schlüssels eines im Server erzeugten Schlüsselpaares von dem Server zu einer Chipkarte. Ein Transportschlüssel zur verschlüsselten Übertragung des geheimen Schlüssels wird mit einem Verschlüsselungsschlüssel der Chipkarte gesichert. Das Dokument wird als nächstliegender Stand der Technik herangezogen.

US 20080301461 A1 zeigt ein System aus Terminal und Karte zur Erzeugung eines Einmalpasswortes.

Bekannte Verfahren zur Authentisierung eines Datenträgers gegenüber der Terminaleinrichtung bzw. zur Authentisierung der Terminaleinrichtung gegenüber dem Datenträger können jedoch nicht die Sicherheit passwortbasierter Verfahren bereitstellen. Diese Authentisierungsverfahren beruhen beispielsweise auf der Verwendung digitaler Zertifikate.

Aufgabe der vorliegenden Erfindung ist es, ein kryptographisches Verfahren vorzuschlagen, welches den Nachteilen des Standes der Technik Rechnung trägt.

Diese Aufgabe wird durch ein Verfahren, einen Datenträger, und ein System mit den Merkmalen der nebengeordneten Ansprüche gelöst. Vorteilhafte Ausgestaltungen und Weiterbildungen sind in den abhängigen Ansprüchen angegeben.

Bei einem erfindungsgemäßen kryptographischen Verfahren zwischen einem portablen Datenträger und einer Terminaleinrichtung werden ein öffentlicher Datenträgerschlüssel und ein geheimer Datenträgerschlüssel des Datenträgers sowie ein öffentlicher Terminalschlüssel und ein geheimer Terminalschlüssel der Terminaleinrichtung verwendet. Der Datenträger verwendet als öffentlichen Datenträgerschlüssel einen statischen öffentlichen Schlüssel, insbesondere einen öffentlichen Gruppenschlüssel. Als geheimen Datenträgerschlüssel verwendet der Datenträger einen geheimen Schlüssel, der aus einem dem öffentlichen Datenträgerschlüssel zugeordneten geheimen Grundschlüssel abgeleitet wird. Erfindungsgemäß prüft die Terminaleinrichtung einen dem Datenträger zugeordneten, von den Datenträgerschlüsseln verschiedenen Authentisierungsparameter.

Dieser Authentisierungsparameter kann beispielsweise durch ein Passwort, ein biometrisches Merkmal eines Nutzers des Datenträgers oder durch ein individuelles Merkmal des Datenträgers gegeben sein. Der Authentisierungsparameter ist in dem Datenträger sicher gespeichert. Der Terminaleinrichtung kann der Authentisierungsparameter im Rahmen des Verfahrens auf verschiedene Weise bereitgestellt werden. Auf der einen Seite kann ein Nutzer des Datenträgers den Authentisierungsparameter über eine geeignete Eingabeeinrichtung in die Terminaleinrichtung eingeben, eine PIN beispielsweise über eine Tastatur, ein biometrisches Merkmal z.B. über einen entsprechenden Sensor. Auf der anderen Seite kann der Authentisierungsparameter optisch auslesbar auf dem Datenträger aufgebracht werden und von der Terminaleinrichtung, wenn der Datenträger derselben geeignet präsentiert wird, ausgelesen werden.

In dem erfindungsgemäßen Verfahren ist ein Speichern des geheimen Grundschlüssels in dem Datenträger nicht mehr notwendig. Demnach kann ein solcher bei einem Angriff auf den Datenträger auch nicht ausgespäht werden. Insbesondere sind auch weitere solche Daten, welche zur Ableitung des geheimen Datenträgerschlüssels aus dem geheimen Grundschlüssel herangezogen werden, in dem Datenträger nicht gespeichert, so dass es auch anhand solcher - in dem Datenträger nicht vorliegender - Daten nicht möglich ist, aus dem geheimen Datenträgerschlüssel auf den geheimen Grundschlüssel zurückzuschließen. Trotzdem bleibt der Datenträger weiterhin über den dem geheimen Grundschlüssel zugeordneten statischen öffentlichen Datenträgerschlüssel authentifizierbar, beispielsweise anhand eines den öffentlichen Datenträgerschlüssel betreffenden Zertifikats, welches auslesbar in dem Datenträger gespeichert sein kann.

In dem Fall, dass der geheime Grundschlüssel einem geheimem Gruppenschlüssel entspricht, welcher für eine Menge oder Gruppe von Datenträgern als geheimer Grundschlüssel verwendet wird, ist eine Kompromittierung eines Datenträgers der Gruppe für die restlichen Datenträger der Gruppe unschädlich, da in dem kompromittierten Datenträger keine sicherheitsrelevanten Daten gespeichert sind, welche die Sicherheit der anderen Datenträger der Gruppe gefährden könnten. Geheime Datenträgerschlüssel anderer, nicht angegriffener Datenträger einer Gruppe von Datenträgern können weiterverwendet werden.

Bedenken hinsichtlich der Anonymität des Nutzers des Datenträgers, welche dadurch entstehen könnten, dass jede Verwendung des Datenträgers eindeutig dem entsprechenden Nutzer anhand des verwendeten statischen öffentlichen Schlüssels zugeordnet werden könnte, können dadurch ausgeräumt werden, dass als statischer öffentlicher Datenträgerschlüssel ein öffentlicher Gruppenschlüssel verwendet wird. Ein Verfolgen des Datenträgers anhand eines datenträgerindividuellen öffentlichen Datenträgerschlüssels ist dann nicht möglich, da ein solcher in dem Datenträger nicht vorliegt. Als öffentlicher Datenträgerschlüssel wird also vorzugsweise ein öffentlicher Gruppenschlüssel verwendet, welcher nicht datenträgerindividuell ist, sondern für alle Datenträger einer Menge oder Gruppe von Datenträgern identisch ist. In dieser Hinsicht sind sämtliche Datenträger einer Gruppe hinsichtlich ihres öffentlichen Datenträgerschlüssels ununterscheidbar. Damit kann die Anonymität des Nutzers gewahrt werden.

Vorzugsweise wird vor einer weiteren Ausführung des kryptographischen Verfahrens der geheime Datenträgerschlüssel des Datenträgers jeweils durch einen aus dem geheimen Datenträgerschlüssel abgeleiteten geheimen Datenträgersitzungsschlüssel des Datenträgers ersetzt. D.h. der Datenträger führt das Verfahren bei jeder Ausführung mit einem anderen geheimen Datenträgerschlüssel aus. Der geheime Datenträgerschlüssel des Datenträgers ist damit als geheimer Sitzungsschlüssel des Datenträgers ausgebildet.

Unter einem Sitzungsschlüssel wird im Rahmen der vorliegenden Erfindung stets ein Schlüssel verstanden, welcher für jede "Sitzung", d.h. hier bei jeder Durchführung des kryptographischen Verfahrens, neu bestimmt wird. In der Regel sind verschiedene Sitzungsschlüssel verschieden, d.h. der Wert eines Sitzungsschlüssels in einer ersten Sitzung unterscheidet sich von dem Wert des Sitzungsschlüssels einer nachfolgenden zweiten Sitzung. Es ist dabei nicht möglich, von einem früheren Sitzungsschlüssel auf einen nachfolgend verwendeten zu schließen und umgekehrt. Beispielsweise sind der öffentliche Terminalschlüssel und der geheime Terminalschlüssel der Terminaleinrichtung vorzugsweise stets als Sitzungsschlüssel in diesem Sinne vorgesehen.

Ein Verfolgen des Nutzers des Datenträgers anhand des geheimen Datenträgerschlüssels des Datenträgers ist demnach ebenso wenig möglich. Ein geheimer Datenträgerschlüssel des Datenträgers könnte zwar auch in anderer, bekannter Weise eingesetzt werden, beispielsweise bei einem challenge-response-Verfahren zur Authentifizierung gegenüber einer Datenverarbeitungseinrichtung. Dadurch, dass der geheime Datenträgerschlüssel gemäß der vorliegenden Erfindung jedoch ein Sitzungsschlüssel ist, d.h. bei jedem Einsatz einen anderen Wert aufweist, kann aus dem geheimen Datenträgerschlüssel alleine nicht auf die Identität des Datenträgers zurückgeschlossen werden. Damit kann die Anonymität des Nutzers auch in dieser Hinsicht gewahrt werden.

Durch die zusätzliche Verwendung des Authentisierungsparameters, welchen die Terminaleinrichtung im Rahmen des erfindungsgemäßen Verfahrens prüft, kann die Sicherheit des Verfahrens weiter verbessert werden. Wird der Terminaleinrichtung der korrekte Authentisierungsparameter bereitgestellt, kann davon ausgegangen werden, dass der Datenträger in den Händen eines legitimen Nutzers liegt, der das Durchführen des kryptographischen Verfahrens zwischen dem Datenträger und der Terminaleinrichtung beabsichtigt. Das unbeabsichtigte oder unerwünschte Durchführen des Verfahrens, beispielsweise auf kontaktlosem Weg und ohne Wissen oder Zustimmung des Nutzers des Datenträgers, kann sicher ausgeschlossen werden.

Durch die Kombination der Verwendung des Authentisierungsparameters mit der Verwendung eines statischen öffentlichen Datenträgerschlüssels können die Vorteile passwortbasierter Verfahren und die Vorteile solcher Verfahren, welche eine beispielsweise zertifikatsbasierte Authentisierung des Datenträgers gegenüber der Terminaleinrichtung anhand des statischen öffentlichen Datenträgerschlüssel erlauben, in einem gemeinsamen Verfahren erreicht werden.

Auf diese Weise können in erheblichem Maß Ressourcen, insbesondere Rechenzeit, eingespart werden. Solche Verfahrensschritte, welche den bekannten Verfahren gemeinsam sind, beispielsweise die Vereinbarung eines gemeinsamen geheimen Kommunikationsschlüssels, werden erfindungsgemäß nur noch einmal durchgeführt.

Ein erfindungsgemäßer portabler Datenträger umfasst einen Prozessor, einen Speicher und eine Datenkommunikationsschnittstelle zu einer Terminaleinrichtung sowie eine Kryptographieeinrichtung. Diese ist eingerichtet, ein kryptographisches Verfahren mit einer Terminaleinrichtung unter Verwendung eines öffentlichen Datenträgerschlüssels und eines geheimen Datenträgerschlüssels des Datenträgers sowie eines öffentlichen Terminalschlüssels und eines geheimen Terminalschlüssels der Terminaleinrichtung durchzuführen. Die Kryptographieeinrichtung ist weiter eingerichtet, einen Sitzungsparameter des Verfahrens mittels eines von den Datenträgerschlüsseln verschiedenen Authentisierungsparameters zu verschlüsseln oder digital zu signieren.

Vorzugsweise ist die Kryptographieeinrichtung weiter eingerichtet, den geheimen Datenträgerschlüssel des Datenträgers jeweils durch einen aus dem geheimen Datenträgerschlüssel abgeleiteten geheimen Datenträgersitzungsschlüssel des Datenträgers zu ersetzten. Auf diese Weise kann, wie beschrieben, jede Durchführung des Authentisierungsverfahrens mit einem sitzungsspezifischen geheimen Datenträgerschlüssel des Datenträgers erfolgen.

Eine erfindungsgemäße Terminaleinrichtung zur Datenkommunikation mit einem erfindungsgemäßen portablen Datenträger ist eingerichtet, ein kryptographisches Verfahren mit einem portablen Datenträger unter Verwendung eines öffentlichen Datenträgerschlüssels und eines geheimen Datenträgerschlüssels des Datenträgers sowie eines öffentlichen Terminalschlüssels und eines geheimen Terminalschlüssels der Terminaleinrichtung durchzuführen. Die Terminalschlüssel sind vorzugsweise jeweils als Sitzungsschlüssel ausgebildet. Die Terminaleinrichtung ist eingerichtet, im Rahmen des kryptographischen Verfahrens einen dem Datenträger zugeordneten, von den Datenträgerschlüsseln verschiedenen Authentisierungsparameter zu prüfen.

Die Terminaleinrichtung ist eingerichtet, den Authentisierungsparameter, wie vorstehend beschrieben, in geeigneter Weise entgegenzunehmen, beispielsweise über eine Eingabeeinrichtung oder eine optische Ausleseeinrichtung.

Das Prüfen des Authentisierungsparameters kann insbesondere dadurch geschehen, dass die Terminaleinrichtung einen von dem Datenträger bereitgestellten verschlüsselten oder digital signierten Sitzungsparameter entschlüsselt bzw. verifiziert. Die Verschlüsselung bzw. Signatur beruht dabei auf dem Authentisierungsparameter. Die Korrektheit des entgegengenommenen Authentisierungsparameters kann von der Terminaleinrichtung im Laufe des Verfahrens beispielsweise dadurch geprüft werden, dass aus dem Sitzungsparameter abgeleitete Werte, beispielsweise ein mit dem Datenträger ausgehandelter Kommunikationsschlüssel, konsistent sind.

Ein erfindungsgemäßes System umfasst einen erfindungsgemäßen Datenträger sowie eine erfindungsgemäße Terminaleinrichtung. Diese sind jeweils eingerichtet, ein erfindungsgemäßes kryptographisches Verfahren durchzuführen.

Im Rahmen des Verfahrens wird mittels des öffentlichen Datenträgerschlüssels und des geheimen Datenträgerschlüssels des Datenträgers sowie des öffentlichen Terminalschlüssels und des geheimen Terminalschlüssels der Terminaleinrichtung ein Kommunikationsschlüssel zwischen dem Datenträger und der Terminaleinrichtung vereinbart. Dieser Kommunikationsschlüssel liegt dann nur diesen beiden Parteien vor. Er ist in diesem Sinne ein geheimer Kommunikationsschlüssel. Eine solche Schlüsselvereinbarung kann beispielsweise mittels eines Diffie-Hellman-Schlüsselaustauschverfahrens erfolgen. Andere, vergleichbare Verfahren sind ebenfalls einsetzbar. Das Vereinbaren des Kommunikationsschlüssels kann als eine Form der impliziten Authentisierung zwischen dem Datenträger und der Terminaleinrichtung angesehen werden. Sofern eine nachfolgende, mittels des vereinbarten Kommunikationsschlüssels verschlüsselte Datenkommunikation zwischen dem Datenträger und der Terminaleinrichtung für beide Seiten erfolgreich erfolgen kann, gilt der einen Partei die andere Partei jeweils als erfolgreich authentisiert.

Vorzugsweise wird der öffentliche Datenträgerschlüssel des Datenträgers durch die Terminaleinrichtung mittels eines Zertifikats des öffentlichen Datenträgerschlüssels verifiziert. Dazu kann das entsprechende Zertifikat der Terminaleinrichtung durch den Datenträger in geeigneter Weise zur Verfügung gestellt werden. Der Datenträger kann der Terminaleinrichtung das Zertifikat beispielsweise zusenden. Es ist auch möglich, das Zertifikat in einem frei auslesbaren Speicherbereich des Datenträgers vorzuhalten. Der Schritt der Verifizierung des Zertifikats kann als Teil eines Authentisierungsverfahrens angesehen werden, bei dem sich der Datenträger gegenüber der Terminaleinrichtung mittels des Zertifikats ausweist. In dem Fall, dass der öffentliche Datenträgerschlüssel datenträgerindividuell ist, kann der Datenträger durch die Terminaleinrichtung eindeutig authentifiziert werden. Wird als öffentlicher Datenträgerschlüssel ein öffentlicher Gruppenschlüssel verwendet, kann der Datenträger zumindest als ein Datenträger der Gruppe, welche dem entsprechenden Gruppenschlüsselpaar zugeordnet ist, authentifiziert werden, jedoch nicht anhand eines datenträgerindividuellen Zertifikats - welches in diesem Fall nicht vorgesehen ist.

In gleicher Weise kann sich das Terminal mittels eines ähnlichen Zertifikats gegenüber dem Datenträger ausweisen.

Vorzugsweise wird der geheime Datenträgerschlüssel des Datenträgers von dem geheimen Grundschlüssel unter Verwendung einer ersten Zufallszahl abgeleitet. Dazu kann jede geeignete Operation verwendet werden, welche als Eingabedaten - unter anderem - den geheimen Grundschlüssel sowie die erste Zufallszahl aufnehmen und zu dem datenträgerindividuellen geheimen Datenträgerschlüssel verarbeiten kann. Beispielsweise können mathematische Operationen, wie Multiplikation, Exponentiation oder ähnliche, zur Anwendung kommen. Das Ableiten des geheimen Datenträgerschlüssels aus dem geheimen Grundschlüssel kann beispielsweise während der Herstellung des Datenträgers erfolgen, z.B. in der Personalisierungsphase, vorzugsweise außerhalb des Datenträgers. Der geheime Datenträgerschlüssel des Datenträgers wird dann in dem Datenträger gespeichert. Auch der öffentliche Datenträgerschlüssel und das diesen Schlüssel betreffende Zertifikat können in dieser Phase in den Datenträger eingebracht werden. Es ist aber auch möglich, dass das Erzeugen des geheimen Datenträgerschlüssels in dem Datenträger selbst durchgeführt wird. Dabei wird der dazu anfangs in dem Datenträger gespeicherte geheime Grundschlüssel durch den erzeugten geheimen Datenträgerschlüssel überschrieben und ist somit nicht mehr in dem Datenträger gespeichert. Die zur Erzeugung des geheimen Datenträgerschlüssels in dem Datenträger temporär gespeicherte Zufallszahl wird ebenfalls gelöscht, sobald der geheime Datenträgerschlüssel erzeugt worden ist.

Der geheime Datenträgersitzungsschlüssel des Datenträgers, welcher jeweils nach einer Ausführung des kryptographischen Verfahrens den aktuellen geheimen Datenträgerschlüssel des Datenträgers ersetzt, kann auf verschiedene Weisen aus dem aktuellen geheimen Datenträgerschlüssel abgeleitet werden. Die Ableitung erfolgt in dem Datenträger. Dadurch, dass der ursprüngliche geheime Datenträgerschlüssel aus dem geheimen Grundschlüssel abgeleitet worden ist und jeder Datenträgersitzungsschlüssel des Datenträgers aus dem jeweils aktuellen geheimen Datenträgerschlüssel des Datenträgers abgeleitet wird - welchen er dann ersetzt -, ist auch jeder geheime Datenträgersitzungsschlüssel des Datenträgers indirekt aus dem geheimen Grundschlüssel abgeleitet. Es ist allerdings nicht möglich, von einem geheimen Datenträgersitzungsschlüssel des Datenträgers auf den geheimen Grundschlüssel zu schließen.

Ein Ersetzen des geheimen Datenträgerschlüssels durch den abgeleiteten geheimen Datenträgersitzungsschlüssel des Datenträgers kann beispielsweise derart erfolgen, dass der geheime Datenträgerschlüssel durch den abgeleiteten Datenträgersitzungsschlüssel "überschrieben" wird, d.h. der geheime Datenträgerschlüssel nimmt den Wert des abgeleiteten Datenträgersitzungsschlüssels an. Der vorhergehende Wert des geheimen Datenträgerschlüssels wird gelöscht. D.h. der Datenträger verfügt stets über "den" geheimen Datenträgerschlüssel, welcher in dem erfindungsgemäßen Verfahren verwendet wird. Allerdings ändert sich der Wert des geheimen Datenträgerschlüssels zwischen zwei Ausführungen des Verfahrens. Der Datenträger verfügt somit jeweils über einen sitzungsspezifischen geheimen Datenträgerschlüssel.

Die Ableitung des geheimen Datenträgersitzungsschlüssels aus dem aktuellen geheimen Datenträgerschlüssel erfolgt basierend auf einem Sitzungsparameter.

Gemäß einer ersten Ausführungsform kann der geheime Datenträgersitzungsschlüssel des Datenträgers von dem geheimen Datenträgerschlüssel unter Verwendung einer Zufallszahl abgeleitet werden. D.h. die Zufallszahl repräsentiert den entsprechenden Sitzungsparameter. Dabei wird für jede Ableitung eines Datenträgersitzungsschlüssels des Datenträgers jeweils eine neue Zufallszahl verwendet. Die Zufallszahl kann in dem Datenträger erzeugt werden. Nach dem Ableiten wird die Zufallszahl gelöscht. Damit wird es unmöglich, aus dem abgeleiteten Datenträgersitzungsschlüssel auf den zur Ableitung verwendeten geheimen Datenträgerschlüssel zurückzuschließen.

Gemäß einer alternativen Ausführungsform kann der Sitzungsparameter abhängig von einem durch die Terminaleinrichtung bereitgestellten Wert bestimmt werden. Dieser Wert kann beispielsweise die Form eines öffentlichen Sektorschlüssels der Terminaleinrichtung annehmen und nach einer erfolgten Authentisierung zwischen Datenträger und Terminal dem Datenträger bereitgestellt werden. Dieser Sektorschlüssel wird in dem Datenträger nun zur Ableitung des geheimen Datenträgersitzungsschlüssels in geeigneter Weise herangezogen.

Zur Ableitung des geheimen Datenträgersitzungsschlüssels des Datenträgers können natürlich auch mehrere Sitzungsparameter, also beispielsweise eine Zufallszahl und ein Terminalparameter, verwendet werden.

Gemäß einer bevorzugten Ausführungsform wird der öffentliche Datenträgerschlüssel mittels Exponentiation einer vorgegebenen Primitivwurzel mit dem geheimen Grundschlüssel bestimmt. Der ursprüngliche geheime Datenträgerschlüssel wird in dieser Ausführungsform dann durch Multiplikation des geheimen Grundschlüssels mit einer ersten Zufallszahl gebildet. Schließlich wird eine erste Basis des Datenträgers mittels Exponentiation der Primitivwurzel mit dem Reziproken der ersten Zufallszahl gebildet wird.

Ein geheimer Datenträgersitzungsschlüssel des Datenträgers wird dann, falls erforderlich, mittels Multiplikation des aktuellen geheimen Datenträgerschlüssels mit einem Sitzungsparameter bestimmt. Eine Sitzungsbasis bestimmt der Datenträger mittels Exponentiation der ersten Basis mit dem Reziproken des Sitzungsparameters. Die Berechnung einer Sitzungsbasis erfolgt genauso wie die Berechnung eines geheimen Datenträgersitzungsschlüssels zur Vorbereitung einer weiteren Durchführung des kryptographischen Verfahrens. Der Sitzungsparameter kann, wie erwähnt, beispielsweise durch eine zweite Zufallszahl oder abhängig von einem Parameter der Terminaleinrichtung vorgegeben werden. Der geheime Datenträgerschlüssel des Datenträgers wird dann in der beschriebenen Weise durch den geheimen Datenträgersitzungsschlüssel des Datenträgers ersetzt. In gleicher Weise wird die erste Basis durch die Sitzungsbasis ersetzt, d.h. der Wert der ersten Basis wird durch den Wert der Sitzungsbasis ersetzt. Damit kann auch die erste Basis des Datenträgers, wie der geheime Datenträgerschlüssel, als sitzungsspezifisch angesehen werden.

Die erste Basis, d.h. deren aktueller Wert, wird der Terminaleinrichtung durch den Datenträger in vorgegebener Weise bereitgestellt. Gemäß einer ersten Ausführungsform wird die erste Basis als Sitzungsparameter durch den Datenträger mittels des Authentisierungsparameters verschlüsselt und der Terminaleinrichtung in verschlüsselter Weise bereitgestellt. Gemäß einer zweiten Ausführungsform ist es möglich, dass der Datenträger die erste Basis, bevor diese der Terminaleinrichtung bereitgestellt wird, anhand des Authentisierungsparameters digital signiert. Bereitstellen kann dabei beispielsweise zugesendet oder frei auslesbar vorgehalten bedeuten.

Die Terminaleinrichtung bestimmt dann ihren öffentlichen Terminalschlüssel mittels Exponentiation der durch den Datenträger bereitgestellten ersten Basis mit dem geheimen Terminalschlüssel der Terminaleinrichtung. Der geheime Terminalschlüssel der Terminaleinrichtung wird von dieser jeweils sitzungsspezifisch erzeugt. Die erste Basis wird dabei von der Terminaleinrichtung zuvor anhand des Authentisierungsparameters entschlüsselt bzw. verifiziert.

Schließlich sendet die Terminaleinrichtung den wie beschrieben bestimmten öffentlichen Terminalschlüssel an den Datenträger.

Damit sind die zur Vereinbarung des Kommunikationsschlüssels notwendigen Daten zwischen dem Datenträger und der Terminaleinrichtung ausgetauscht. Der Datenträger berechnet seinerseits den Kommunikationsschlüssel mittels Exponentiation des empfangenen öffentlichen Terminalschlüssels der Terminaleinrichtung mit dem eigenen geheimen Schlüssel. Die Terminaleinrichtung bestimmt den Kommunikationsschlüssel ihrerseits mittels Exponentiation des öffentlichen Datenträgerschlüssels mit dem eigenen geheimen Terminalschlüssel der Terminaleinrichtung.

Anschließend - oder alternativ vor der Vereinbarung des Kommunikationsschlüssels - kann die Terminaleinrichtung auch gemäß dieser Ausführungsform, wie erwähnt, den öffentlichen Datenträgerschlüssel des Datenträgers mittels des dafür von dem Datenträger bereitgestellten Zertifikats überprüfen.

Gemäß einer alternativen Ausführungsform des erfindungsgemäßen Verfahrens verwendet der Datenträger anstelle des statischen öffentlichen Schlüssels als öffentlichen Datenträgerschlüssel einen pro Sitzung dynamisch erzeugten öffentlichen Schlüssel. Das heißt, der Datenträger verwendet bei jedem Durchführen des kryptographischen Verfahrens ein dynamisch erzeugtes Schlüsselpaar. Dabei werden ein öffentlicher Datenträgerschlüssel und ein geheimer Datenträgerschlüssel des Datenträgers sitzungsspezifisch in dem Datenträger erzeugt. Gemäß dieser Ausführungsform stellt der Datenträger der Terminaleinrichtung, wie vorstehend bereits beschrieben, stets als Sitzungsparameter einen aus einer vorgegebenen Primitivwurzel abgeleiteten Basiswert bereit, welcher zuvor von dem Datenträger mittels des Authentisierungsparameters verschlüsselt worden ist. Ansonsten verläuft das Verfahren dieser zweiten Ausführungsform wie vorstehend mit Bezug auf die erste Ausführungsform beschrieben.

Im Unterschied zu bekannten kryptographischen Verfahren, welche eine passwortbasierte Authentisierung vorsehen, wird vorliegend nicht eine beliebige Zufallszahl oder dergleichen als Sitzungsparameter mittels des Authentisierungsparameters verschlüsselt und der Terminaleinrichtung bereitgestellt. Vorliegend dient erfindungsgemäß der aus der Primitivwurzel abgeleitete Basiswert als Sitzungsparameter. Dies hat den Vorteil, dass die Primitivwurzel - als erzeugendes Element einer multiplikativen Untergruppe - in dem Datenträger unmittelbar im Rahmen des anschließenden Schlüsselaustauschverfahrens herangezogen werden kann. Datenträgerintern sind dazu keine weiteren Berechnungen erforderlich, noch bedarf es zusätzlichen Kommunikationsbedarfs mit der Terminaleinrichtung. Gemäß dem Stand der Technik muss aus der dort als Sitzungsparameter verschlüsselt übertragenen Zufallszahl in dem Datenträger - und der Terminaleinrichtung - erst mittels einer aufwändigen Berechnung ein geeigneter Basiswert abgeleitet werden, der dann im Rahmen der Schlüsselableitung verwendet werden kann. Neben der Berechnung erfordert dies weiteren Kommunikationsbedarf mit der Terminaleinrichtung zum Austauschen eines weiteren Parameters, welcher zu der Ableitung des Basiswertes erforderlich ist. Demnach kann das vorliegende Verfahren gemäß der zweiten Ausführungsform ohne Sicherheitseinbußen im Vergleich zu bekannten, ähnlichen Verfahren wesentlich effizienter und Ressourcen sparender durchgeführt werden. Dies ist besonders mit Hinblick auf stets knappe Ressourcen in portablen Datenträgern vorteilhaft.

Bei der dynamischen Erzeugung des Schlüsselpaars in dem Datenträger wird vorzugsweise pro Sitzung dynamisch ein geheimer Grundschlüssel erzeugt. Als dynamisch erzeugter öffentlicher Datenträgerschlüssel wird dann ein öffentlicher Schlüssel verwendet, welcher mittels Exponentiation der vorgegebenen Primitivwurzel mit dem dynamisch erzeugten geheimen Grundschlüssel bestimmt wird. Der geheime Datenträgerschlüssel schließlich wird mittels Multiplikation des geheimen Grundschlüssels mit einer Zufallszahl gebildet. Der Basiswert ergibt sich mittels einer Exponentiation der Primitivwurzel mit dem Reziproken der Zufallszahl. Die Ableitung der Schlüssel der Terminaleinrichtung kann genau wie mit Bezug auf die erste Ausführungsform beschrieben erfolgen.

Im Folgenden wird die Erfindung mit Bezug auf die beiliegenden Zeichnungen beispielhaft beschrieben. Darin zeigen:

Figur 1            schematisch eine bevorzugte Ausführungsform eines erfindungsgemäßen Datenträgers,

Figuren 2 und 3       Schritte einer ersten bevorzugten Ausführungsform des erfindungsgemäßen Verfahrens zwischen dem Datenträger aus Fig. 1 und einer Terminaleinrichtung, und

Figur 4        zusätzliche Schritte des Verfahrens aus den Fig. 2 und 3 zum Bereitstellen sitzungsspezifischer Datenträgerparameter.

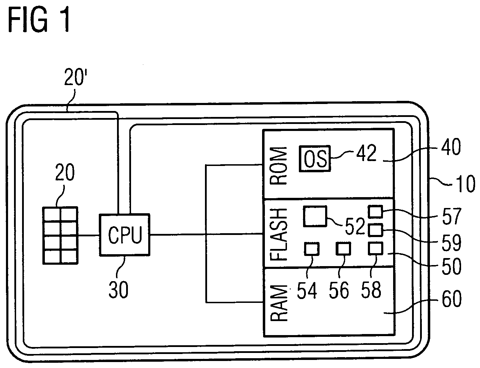

Mit Bezug auf Fig. 1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

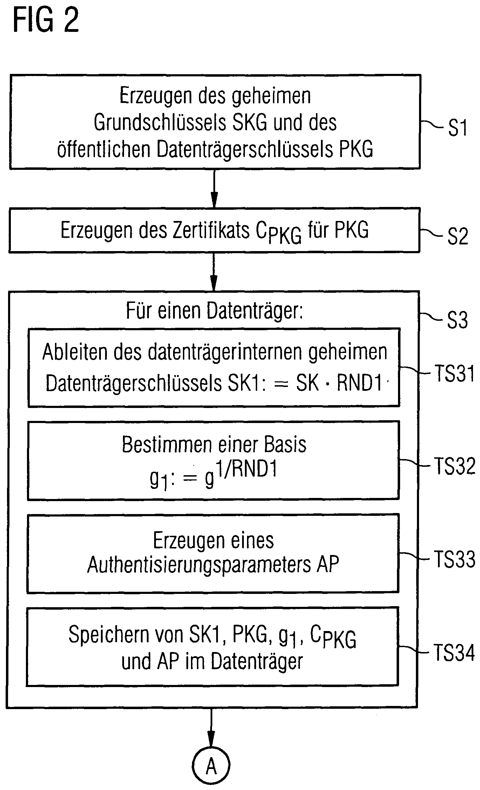

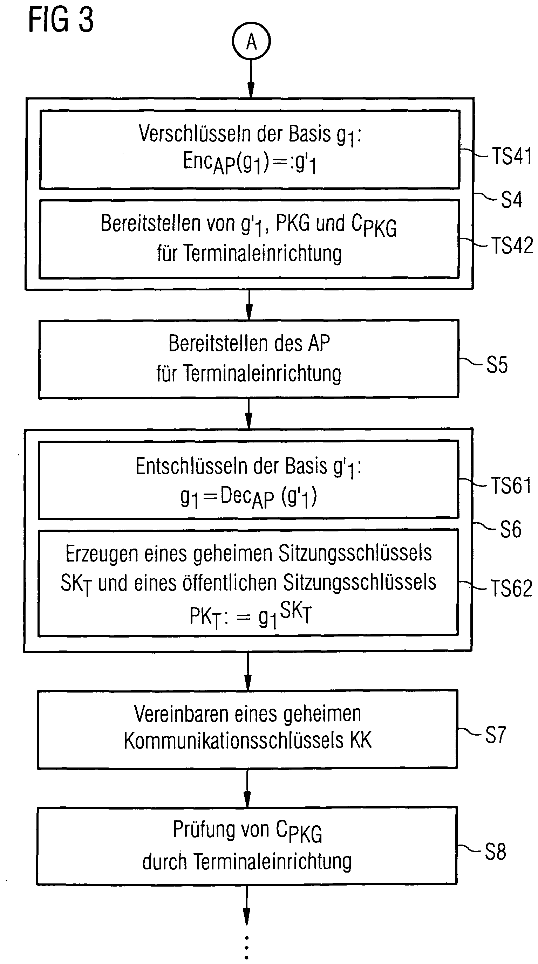

Der Speicher 50 umfasst eine Kryptographieeinrichtung 52, mittels welcher ein kryptographisches Verfahren zwischen dem Datenträger 10 und einer Terminaleinrichtung (nicht gezeigt) durchgeführt werden kann. Dabei finden die ebenfalls in dem Speicher gespeicherten Schlüssel 54, 56, ein weiterer Wert 57 sowie ein digitales Zertifikat 58 ihre Anwendung. Schließlich ist in dem Datenträger 10 ein Authentisierungsparameter 59 gespeichert. Die Funktionsweise der Kryptographieeinrichtung 52 sowie die Rolle der Schlüssel 54, 56, des Wert 57, des Authentisierungsparameters 59 und des Zertifikat 58 im Rahmen eines kryptographischen Verfahrens werden mit Bezug auf die Figuren 2 und 3 genauer beschrieben. Der Speicher 50 kann weitere Daten enthalten, beispielsweise einen Nutzer betreffende Daten.

Der flüchtige, wiederbeschreibbare RAM-Speicher 60 dient dem Datenträger 10 als Arbeitsspeicher.

Der Datenträger 10 kann, wenn er beispielsweise ein elektronisches Ausweisdokument darstellt, weitere Merkmale umfassen (nicht gezeigt). Diese können sichtbar auf einer Oberfläche des Datenträgers 10 aufgebracht, beispielsweise aufgedruckt, sein und den Nutzer des Datenträgers bezeichnen, beispielsweise durch seinen Namen oder ein Foto. Gemäß einer Ausführungsform, die nachstehend genauer beschrieben wird, ist es möglich, dass der Authentisierungsparameter 59, beispielsweise in Form einer PIN oder dergleichen, nicht nur in dem Datenträger 10 gespeichert ist, sondern zusätzlich optisch auslesbar auf die Datenträgeroberfläche aufgebracht, z.B. aufgedruckt, ist.

Mit Bezug auf die Figuren 2 und 3 wird nun eine Ausführungsform des kryptographischen Verfahrens zwischen dem Datenträger 10 und einer Terminaleinrichtung genauer beschrieben. In Fig. 2 sind vorbereitende Schritte gezeigt. Diese können beispielsweise während der Herstellung des Datenträgers 10, etwa in einer Personalisierungsphase, durchgeführt werden.

In einem ersten Schritt S1 werden ein geheimer Grundschlüssel SKG sowie ein öffentlicher Datenträgerschlüssel PKG gebildet. Der geheime Grundschlüssel SKG kann als geheimer Gruppenschlüssel ausgebildet sein, welcher einer Menge oder Gruppe von Datenträgern 10 gemeinsam ist. Der geheime Grundschlüssel sowie der öffentliche Datenträgerschlüssel PKG sind statisch, d.h. dem Datenträger 10 für seine gesamte Lebensdauer zugeordnet.

Der öffentliche Datenträgerschlüssel PKG berechnet sich als Ergebnis einer Exponentiation einer vorgegebenen Primitivwurzel g modulo einer vorgegebenen Primzahl p. Sämtliche im Folgenden beschriebenen Berechnungen sind modulo der Primzahl p zu lesen, ohne dass dies stets explizit angegeben ist. Die beiden Schlüssel SKG und PKG bilden ein Datenträgerschlüsselpaar und stellen eine Grundlage für das nachstehend beschriebene Verfahren dar.

An dieser Stelle ist zu bemerken, dass sämtliche Berechnungen, d.h. Multiplikationen und Exponentiationen, welche im Rahmen der vorliegenden Erfindung dargestellt werden, nicht lediglich über einer primen Restklassengruppe modulo p, sondern über einer beliebigen Gruppe - hier verstanden als mathematische Struktur und nicht zu verwechseln mit der oben genannten Gruppe von Datenträgern - durchgeführt werden können, beispielsweise auch basierend auf elliptischen Kurven.

In Schritt S2 wird ein Zertifikat $C_{PKG}$ gebildet, welches zur Verifikation des öffentlichen Datenträgerschlüssels PKG dient.

Schritt S3 findet während der Personalisierung des Datenträgers 10 statt. Dabei wird der Datenträger 10 mit einem Datenträgerschlüsselpaar ausgestattet. Der öffentliche Datenträgerschlüssel PKG dient dem Datenträger 10 als öffentlicher Schlüssel. Ein geheimer Datenträgerschlüssel SK1 des Datenträgers 10 wird randomisiert, d.h. unter Verwendung einer Zufallszahl RND1, aus dem geheimen Grundschlüssel SKG abgeleitet.

Auf diese Weise wird, falls der geheime Grundschlüssel ein geheimer Gruppenschlüssel ist, jeder Datenträger 10 der Gruppe mit einem Schlüsselpaar ausgestattet, welches sich von einem entsprechenden Schlüsselpaar eines anderen Datenträgers der Gruppe - aufgrund der randomisierten Komponente bei der Schlüsselableitung - durch jeweils verschiedene geheime Datenträgerschlüssel SK1 unterscheidet. Auf der anderen Seite umfassen, in dem Fall, dass SKG ein geheimer Gruppenschlüssel ist, aufgrund der vorstehend beschriebenen Ableitung des öffentlichen Datenträgerschlüssels, alle Datenträger 10 der Gruppe denselben öffentlichen Datenträgerschlüssel PKG. Weiterhin sind in diesem Falls sämtliche geheimen Datenträgerschlüssel der Gruppe von Datenträgern aus demselben geheimen Gruppenschlüssel abgeleitet worden.

Ist hingegen der geheime Grundschlüssel SKG kein Gruppenschlüssel, d.h. für jeden Datenträger 10 wird ein individueller geheimer Grundschlüssel bereitgestellt, so umfasst auch jeder Datenträger 10 einen zwar statischen aber individuellen öffentlichen Datenträgerschlüssel PKG.

In Teilschritt TS31 wird ein datenträgerindividueller geheimer Datenträgerschlüssel SK1 abgeleitet, indem der geheime Grundschlüssel SKG mit der Zufallszahl RND1 multipliziert wird.

In einem weiteren Schritt TS32 wird, ausgehend von der Primitivwurzel g, eine erste Basis g1 berechnet. Dabei wird die Primitivwurzel g mit dem Reziproken der Zufallszahl RND1, welche bereits zum Bestimmen des geheimen Schlüssels verwendet worden ist, exponentiert: $g1 := g^{(1/RND1)}$. Das Reziproke $1/RND1$ der Zufallszahl RND1 bildet dabei das multiplikative Inverse der Zufallszahl RND1 bezüglich der Multiplikation modulo der Primzahl p.

In Teilschritt TS33 wird ein Authentisierungsparameter AP erzeugt. Dieser dient, wie nachfolgend mit Bezug auf Fig. 3 beschrieben, einer passwortbasierten Authentisierung im Rahmen des kryptographischen Verfahrens. Der Authentisierungsparameter AP kann in beliebiger, geeigneter Form erzeugt bzw. bereitgestellt werden, beispielsweise als Geheimdatum in Form einer PIN, als Schlüssel für ein symmetrisches Verschlüsselungsverfahren (AES, TDES, DES u.ä.) oder dergleichen. Es ist ebenfalls möglich, ein biometrisches Merkmal eines späteren Nutzers des Datenträgers 10, beispielsweise einen Fingerabdruck oder dergleichen, als Authentisierungsparameter AP zu erzeugen. Schließlich kann auch ein für den Datenträger 10 individuelles Datenträgermerkmal als Authentisierungsparameter AP herangezogen werden, beispielsweise ein MM-Merkmal. "MM" steht dabei für "moduliertes maschinenfähiges" (Merkmal), eine im Datenträgerkörper eingebrachte, geheime maschinenlesbare Substanz.

Die Schlüssel SK1 und PKG werden in Teilschritt TS34 zusammen mit der Basis g1, dem Zertifikat $C_{PKG}$ und dem Authentisierungsparameter AP in dem Datenträger 10 gespeichert. Der Authentisierungsparameter AP wird dazu gegebenenfalls geeignet digitalisiert. Dies gilt beispielsweise, wenn ein biometrisches Merkmal als Authentisierungsparameter AP erzeugt wird. Auch im Falle eines MM-Merkmals als Authentisierungsparameter wird die mittels dieses Merkmals maschinenlesbar kodierte "Nachricht" nochmals digital in einem Speicher des Datenträgers 10 gespeichert. Der Datenträger 10 benötigt, wie nachstehend beschrieben, den Authentisierungsparameter AP, um damit Daten zu verschlüsseln oder digital zu signieren.

Gegebenenfalls kann der Authentisierungsparameter AP, wie dies mit Bezug auf das MM-Merkmal bereits der Fall ist, derart auf dem Datenträger aufgebracht werden, dass dieser Parameter von einer Terminaleinrichtung auf optische oder andere Weise maschinell ausgelesen werden kann, wenn der Datenträger der Terminaleinrichtung geeignet präsentiert wird. Beispielsweise kann also auch eine als Authentisierungsparameter AP dienende PIN - zusätzlich zur Speicherung in einem Speicher 50 des Datenträgers 10 - optisch auslesbar auf einem Datenträgerkörper des Datenträgers 10 aufgebracht, z.B. aufgedruckt, werden. Wichtig dabei ist lediglich, dass das maschinelle Auslesen nur dann stattfinden kann, wenn der Nutzer des Datenträgers dies beabsichtigt und erlaubt, nicht also beispielsweise unerkannt auf kontaktlosen Weg.

Die Zufallszahl RND1 wird nicht in dem Datenträger 10 gespeichert, genauso wenig wie der geheime Grundschlüssel SKG.

Der Datenträger 10 ist damit eingerichtet, mittels seiner Kryptographieeinrichtung 52 ein kryptographisches Verfahren mit einer Terminaleinrichtung durchzuführen, wie dies mit Bezug auf Fig. 3 genauer beschrieben wird.

In Schritt S4 stellt der Datenträger 10 der Terminaleinrichtung die zur Durchführung des kryptographischen Verfahrens notwendigen Daten bereit (vgl. Teilschritt TS42). Zum Vereinbaren eines Kommunikationsschlüssels KK benötigt die Terminaleinrichtung in der dargestellten Ausführungsform die Basis g1 sowie den öffentlichen Gruppenschlüssel PKG. Zur Verifizierung desselben benötigt die Terminaleinrichtung ein entsprechendes Zertifikat $C_{PKG}$.

Die Basis g1 wird allerdings, bevor sie der Terminaleinrichtung als Sitzungsparameter bereitgestellt wird, in dem Datenträger 10 mittels des Authentisierungsparameters AP in Teilschritt TS41 verschlüsselt. Alternativ kann die Basis g1 auch mittels des Authentisierungsparameters g1 digital signiert werden. Auf diese Weise kann auf einfache Art, wie nachstehend beschrieben, eine passwortbasierte Authentisierung in das Verfahren integriert werden.

Die beschriebenen Parameter des Datenträgers 10 kann der Datenträger 10 in Teilschritt TS42 an die Terminaleinrichtung senden. Es ist auch möglich, dass diese Werte in einem frei auslesbaren Speicherbereich des Datenträgers 10 gespeichert sind und von der Terminaleinrichtung bei Bedarf ausgelesen werden.

In Schritt S5 wird der Terminaleinrichtung der Authentisierungsparameter AP, welchen diese zu Prüf- bzw. Authentisierungszwecken benötigt, extern bereitgestellt. Gemäß einer Variante kann der Authentisierungsparameter durch einen Nutzer des Datenträgers über eine Eingabeeinrichtung in die Terminaleinrichtung eingegeben werden. Eine PIN kann beispielsweise über eine Tastatur oder dergleichen eingegeben werden, ein Fingerabdruck über einen geeigneten Sensor. Alternativ kann der Nutzer des Datenträgers denselben der Terminaleinrichtung auch derart geeignet präsentieren, dass ein auf den Datenträger aufgebrachter Authentisierungsparameter von der Terminaleinrichtung maschinell ausgelesen werden kann, beispielsweise ein vorstehend beschriebenes MM-Merkmal oder eine auf dem Datenträgerkörper aufgedruckte PIN.

In Schritt S6 bereitet die Terminaleinrichtung ihrerseits das kryptographische Verfahren vor. In Teilschritt TS61 entschlüsselt die Terminaleinrichtung auf Basis des in Schritt S5 empfangenen Authentisierungsparameters AP die verschlüsselte Basis g1', um daraus die Basis g1 zu erhalten. In dem Fall, dass der Datenträger der Terminaleinrichtung in Teilschritt TS42 die Basis g1 in digital signierter Form bereitgestellt hat, verifiziert die Terminaleinrichtung die Signatur in Teilschritt TS61 entsprechend anhand des Authentisierungsparameters AP.

Die Prüfung des Authentisierungsparameters AP durch die Terminaleinrichtung, und damit die Authentifizierung des Nutzers des Datenträgers 10 bzw. des Datenträgers 10 selbst, erfolgt in dem Fall, dass die Basis g1 von dem Datenträger 10 in Teilschritt TS41 digital signiert worden ist, mit dem Verifizieren der Signatur in Teilschritt TS61. Ist dieses Verifizieren erfolgreich, gilt der Authentisierungsparameter als erfolgreich geprüft.

Im bevorzugten alternativen Fall, dass die Basis g1 in Teilschritt TS41 von dem Datenträger 10 mittels des Authentisierungsparameters AP verschlüsselt worden ist, erfolgt die Prüfung des Authentisierungsparameters AP einerseits beim Entschlüsseln der verschlüsselten Basis g1. Ein weiterer impliziter Prüfschritt erfolgt dann erst später im Laufe des Verfahrens, nämlich dadurch, dass festgestellt wird - oder eben nicht -, dass das Vereinbaren eines geheimen Kommunikationsschlüssels KK (vgl. Schritt S7) erfolgreich durchgeführt werden konnte. Diese Tatsache kann dadurch festgestellt werden, dass eine auf Basis des vereinbarten Kommunikationsschlüssels KK angestrebte, symmetrisch verschlüsselte Datenkommunikation zwischen dem Datenträger 10 und der Terminaleinrichtung auch tatsächlich durchgeführt werden kann, dass also beide Parteien im Besitz des gleichen Kommunikationsschlüssels KK sind. Erst zu diesem Zeitpunkt zeigt sich, dass die von der Terminaleinrichtung in Teilschritt TS61 auf Basis des in Schritt S5 entgegengenommenen Authentisierungsparameters AP entschlüsselte erste Basis g1 der Basis g1 entspricht, welche der Datenträger 10 in Teilschritt TS41 mittels des in dem Datenträgers 10 gespeicherten Authentisierungsparameters AP verschlüsselt hat. Auf diese Weise können spezielle Angriffe, beispielsweise Wörterbuchangriffe auf ein Passwort in Form des Authentisierungsparameters, verhindert werden.

Es kann vorgesehen sein, dass im direkten Anschluss an das hier beschriebene kryptographische Verfahren weitere Authentisierungsverfahren zwischen dem Datenträger 10 und der aktuellen oder einer weiteren Terminaleinrichtung, welche mit der aktuellen Terminaleinrichtung, beispielsweise über ein Datenkommunikationsnetzwerk, verbunden ist, durchgeführt werden. Dabei kann sich der Datenträger in bekannter Weise gegenüber der Terminaleinrichtung authentisieren und umgekehrt. Da auch diese Verfahren ein nachfolgend beschriebenes Schlüsselaustauschverfahren, beispielsweise basierend auf dem bekannten Diffie-Hellman-Verfahren, umfassen, kann die aktuelle Terminaleinrichtung, falls erforderlich, der verbundenen Terminaleinrichtung die Basis g1 über einen gesicherten Datenübertragungskanal (z.B. via SSL) übermitteln. Entsprechende Authentisierungsverfahren zwischen dem Datenträger 10 und der entsprechenden Terminaleinrichtung können dann wie bekannt durchgeführt werden.

In Teilschritt TS62 erzeugt die Terminaleinrichtung dann einen geheimen Terminalschlüssel $SK_T$. Dies kann beispielsweise randomisiert geschehen. Einen öffentlicher Terminalschlüssel $PK_T$ der Terminaleinrichtung berechnet diese mittels Exponentiation der durch den Datenträger 10 in der beschriebenen Weise bereitgestellten Basis g1 mit dem eigenen geheimen Terminalschlüssel:

$$PK_T := g1^{\wedge SK_T}.$$

Optional kann die Terminaleinrichtung g1 und/ oder $PK_T$ validieren, insbesondere also auf bestimmte Kriterien prüfen. Ein Angriff auf den geheimen Terminalschlüssel $SK_T$ mittels geschickt gewählter Werte für g1 kann somit vom Terminal erkannt werden, welches dann den Vorgang abbrechen bzw. die weitere Kommunikation ablehnen kann.

Der öffentliche Terminalschlüssel $PK_T$ wird dem Datenträger 10 durch die Terminaleinrichtung bereitgestellt, beispielsweise zugesendet.

Im folgenden Schritt S7 wird nun der Kommunikationsschlüssel KK, wie bereits angedeutet, konkret vereinbart. Der Datenträger 10 berechnet diesen Kommunikationsschlüssel KK durch Exponentiation des öffentlichen Terminalschlüssels $PK_T$ der Terminaleinrichtung mit dem eigenen geheimen Schlüssel SK1:

$$
\begin{aligned}
KK_{DT} \quad &:= PK_T^{\wedge SK1} \\
&= (g1^{\wedge SK_T})^{\wedge SK1} &&\text{(Def. von } PK_T) \\
&= ((g^{\wedge}(1/RND1)^{\wedge SK_T})^{\wedge SK1} &&\text{(Def. von g1)} \\
&= ((g^{\wedge}(1/RND1)\ ^{\wedge SK_T})^{\wedge\ (SKG*RND1)} &&\text{(Def. von SK1)} \\
&= (g^{\wedge}((1/RND1)*SK_T*SKG*RND1) &&\text{(Umformung)} \\
&= g^{\wedge}(SK_T*SKG)
\end{aligned}
$$

Die Terminaleinrichtung berechnet den Kommunikationsschlüssel KK mittels Exponentiation des öffentlichen Datenträgerschlüssels PKG mit dem geheimen Terminalschlüssel $SK_T$ der Terminaleinrichtung:

$$KK_T \quad := PKG^{\wedge ST}{}_T$$
$$= (g^{\wedge}SKG)^{\wedge SK}{}_T \quad \text{(Def. von PKG)}$$
$$= g^{\wedge}(SK_T * SKG) \quad \text{(Umformung)}$$

Es zeigt sich also, dass der Datenträger 10 und die Terminaleinrichtung aufgrund der ihnen jeweils vorliegenden Daten zu demselben Ergebnis gelangen. Dies gilt, wie vorstehend beschrieben, nur dann, wenn die Terminaleinrichtung in Teilschritt TS61 genau denjenigen Wert der Basis g1 als Ergebnis der Entschlüsselung erhält, welcher in Teilschritt TS41 von dem Datenträger 10 verschlüsselt worden ist. Dies wiederum ist genau dann der Fall, wenn der Authentisierungsparameter AP, der in dem Datenträger 10 zum Verschlüsseln herangezogen worden ist, mit dem Authentisierungsparameter AP übereinstimmt, welcher der Terminaleinrichtung in Schritt S5 bereitgestellt worden ist. Mit anderen Worten genau dann, wenn das auf Basis des Authentisierungsparameters AP durchgeführte, passwortbasierte Authentisierungsverfahren zwischen dem Datenträger 10 und der Terminaleinrichtung - als ein Teil des zwischen diesen Parteien durchgeführten kryptographischen Verfahrens - erfolgreich durchgeführt werden konnte.

In Schritt S8 schließlich prüft die Terminaleinrichtung das Zertifikat $C_{PKG}$ des öffentlichen Datenträgerschlüssels PKG. Diese Prüfung des Zertifikats kann alternativ auch vor dem Vereinbaren des Kommunikationsschlüssels KK in Schritt S7 und/ oder des geheimen Sitzungsschlüssels $SK_T$ in Schritt S6 erfolgen.

Damit ist das kryptographische Verfahren zwischen dem Datenträger 10 und der Terminaleinrichtung abgeschlossen.

Damit der Datenträger 10 bei nachfolgenden, weiteren Authentisierungen mittels des beispielhaft beschriebenen Verfahrens gegenüber derselben oder einer anderen Terminaleinrichtung nicht identifiziert und eindeutig einem Nutzer zugeordnet werden kann, werden in dem Datenträger 10 sitzungsspezifische Datenträgerparameter bereitgestellt. Dies betrifft den geheimen Datenträgerschlüssel SK1 sowie die Basis g1. Diese wird, wie beschrieben, im Rahmen des Verfahrens an die Terminaleinrichtung übertragen oder dieser auf andere Weise bereitgestellt. Eine unveränderte, datenträgerindividuelle Basis g1 könnte somit zur Identifizierung des Datenträgers 10 verwendet werden. Dasselbe gilt für einen geheimen Datenträgerschlüssel SK1 des Datenträgers 10, sofern dieser statisch datenträgerindividuell wäre und beispielsweise im Rahmen eines challenge-response-Verfahrens eingesetzt werden würde.

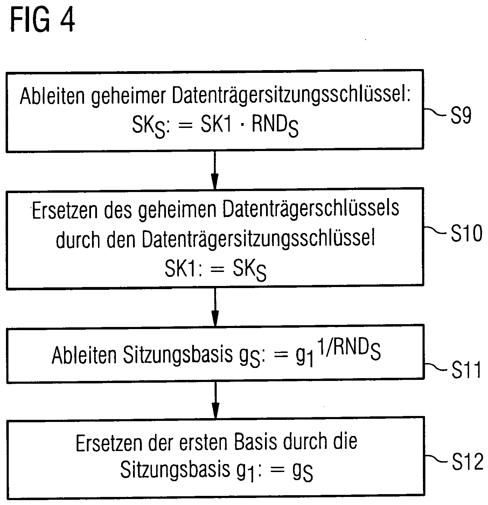

Die datenträgerinterne Erzeugung sitzungsspezifischer Datenträgerparameter wird im Folgenden mit Bezug auf Fig. 4 beschrieben.

In Schritt S9 ist das Ableiten eines geheimen Datenträgersitzungsschlüssels $SK_S$ in dem Datenträger 10 gezeigt. Dazu wird ein Sitzungsparameter in Form einer Zufallszahl RNSs in dem Datenträger 10 bereitgestellt. Der aktuelle geheime Schlüssel SK1 wird mit der Zufallszahl RNSs multipliziert, wodurch ein geheimer Datenträgersitzungsschlüssel $SK_S$ des Datenträgers 10 abgeleitet wird:

$$SK_S := SK1 * RNS_S.$$

Anschließend wird in Schritt S10 der Wert des aktuellen geheimen Datenträgerschlüssels SK1 durch den Wert des Datenträgersitzungsschlüssels ersetzt: $SK1:= SK_S$.
Damit ist der geheime Datenträgerschlüssel SK1 des Datenträgers 10 sitzungsspezifisch. Eine Verfolgung des Datenträgers 10 anhand des geheimen Datenträgerschlüssels SK1 scheidet aus, da sich dieser zwischen je zwei durchgeführten Authentisierungsverfahren in der beschriebenen Weise ändert.

In gleicher Weise wird, wie in den Schritten S11 und S12 gezeigt, die Basis g1 durch eine Sitzungsbasis gs ersetzt (g1: = gs), welche sich zuvor dadurch berechnet, dass die Basis g1 mit dem Reziproken der Zufallszahl RNSs exponentiert wird: gs := g1^(1/ RNSs). Damit ist auch die Basis g1 des Datenträgers 10 stets sitzungsspezifisch und eine Verfolgung des Datenträgers 10 anhand der an die Terminaleinrichtung übertragenen Basis g1 scheidet aus. Die Zufallszahl RNSs wird anschließend gelöscht. Ein Rückschluss auf vorherige Sitzungsparameter ist damit ebenfalls ausgeschlossen.

Anstelle der Zufallszahl $RNS_S$ oder zusätzlich dazu kann auch ein anderer Sitzungsparameter verwendet werden. Dieser kann auch von einem von der Terminaleinrichtung, beispielsweise im Anschluss an eine erfolgreiche Authentisierung gegenüber dem Datenträger 10, bereitgestellten Wert abhängen. Der entsprechende Sitzungsparameter wird datenträgerintern abhängig von dem durch die Terminaleinrichtung bereitgestellten Wert berechnet. Ein derart berechneter Sitzungsparameter kann dann beispielsweise anstelle der in den Schritten S9 und S11 verwendeten Zufallszahl $RNS_S$ zur Erzeugung eines geheimen Sitzungsschlüssels bzw. einer Sitzungsbasis herangezogen und anschließend gelöscht werden. Damit besitzt der Datenträger 10 sitzungsspezifische Parameter für das nächste, durchzuführende Authentisierungsverfahren.

Gemäß einer bevorzugten Ausführungsform stellt die Terminaleinrichtung dem Datenträger 10 einen so genannten öffentlichen Sektorschlüssel PK$_{SEC}$ zur Verfügung. Abhängig von diesem kann der Datenträger 10 dann den aktuellen Sitzungsparameter wie nachfolgend beschrieben berechnen.

Der öffentliche Sektorschlüssel PK$_{SEC}$ ist dabei Teil eines Sektorschlüsselpaars (PK$_{SEC}$, SK$_{SEC}$), wobei der entsprechende geheime Sektorschlüssel SK$_{SEC}$ der Terminaleinrichtung selbst nicht vorliegt, sondern lediglich einer übergeordneten Sperrinstanz, welcher verschiedene Terminaleinrichtungen in verschiedenen so genannten Sektoren unterstellt sind. D.h. die Sperrinstanz verwaltet verschiedene Terminaleinrichtungen in verschiedenen Sektoren, beispielsweise verschiedenen Verwaltungsbezirken oder dergleichen. Das genannte Sektorschlüsselpaar (PK$_{SEC}$, SK$_{SEC}$) ergänzend kann auch der Datenträger 10 ein entsprechendes Datenträgersektorschlüsselpaar (PKD$_{SEC}$, SKD$_{SEC}$) umfassen, welches einen geheimen Datenträgersektorschlüssel SKD$_{SEC}$ und einen öffentlichen Datenträgersektorschlüssel SKD$_{SEC}$ umfasst. Letzterer ist in einer Datenbank gespeichert, auf welche die Sperrinstanz Zugriff hat. Die genannten Sektorschlüssel dienen dazu, einen Datenträger 10 zumindest innerhalb eines Sektors durch eine Terminaleinrichtung identifizieren zu können. Diese Identifikation kann auch zu Sperrzwecken durch die Sperrinstanz herangezogen werden.

Die Identifikation des Datenträgers 10 erfolgt anhand eines zwischen der Terminaleinrichtung und dem Datenträger 10 vereinbarten Wertes I$_{SEC}$. Dieser Wert berechnet sich dadurch, dass die Terminaleinrichtung dem Datenträger 10 ihren öffentlichen Sektorschlüssel PK$_{SEC}$ bereitstellt. Der Datenträger 10 leitet daraus mittels seines geheimen Datenträgersektorschlüssels SKD$_{SEC}$ einen Wert ab, beispielsweise wie aus dem Diffie-Hellman-Schlüsselaustauschverfahren bekannt. Dieser Wert wird dann mittels einer Hashfunktion H komprimiert und der Terminaleinrichtung bereitgestellt. Die Terminaleinrichtung vergleicht den erhaltenen Wert I$_{SEC}$ mit einem entsprechenden Wert, welchen die Terminaleinrichtung von der Sperrinstanz erhalten hat. Nur die Sperrinstanz ist in der Lage, abhängig von dem in der Datenbank gespeicherten öffentlichen Datenträgersektorschlüssel PKD$_{SEC}$ und dem geheimen Sektorschlüssel SK$_{SEC}$ ihrerseits den Wert I$_{SEC}$ zu berechnen. Der Wert I$_{SEC}$ ist also sektorabhängig sowie abhängig vom den Datenträger 10. Die Sperrinstanz ist im Besitz sämtlicher geheimer Sektorschlüssel der ihr unterstellten Sektoren.

Der Wert I$_{SEC}$ dient nun innerhalb des Datenträgers 10 als Sitzungsparameter. D.h. die Berechnung des geheimen Sitzungsschlüssels SK$_s$ und der Sitzungsbasis gs erfolgt analog zu den Schritten S9 und S11 mit I$_{SEC}$ anstelle von RNS$_s$.

Es kann nun vorgesehen sein, in dem Datenträger 10 die erste Basis g1 separat, z.B. als g$_B$, zu speichern. Diese Basis g$_B$ dient, wie nachfolgend beschrieben, zu Prüfzwecken und wird nicht überschrieben. Weiterhin kann für jede Sitzung i, d.h. für jedes durchgeführte Authentisierungsverfahren zwischen dem Datenträger 10 und einer Terminaleinrichtung, der von der Terminaleinrichtung bereitgestellte öffentliche Sektorschlüssel PK$_{SEC;i}$ mit Bezug auf die Sitzung, d.h. die Nummer i der Sitzung in der erfolgten Reihenfolge, in dem Datenträger 10 gespeichert werden. Es handelt sich dabei lediglich um öffentliche Daten. Es besteht somit kein Sicherheitsrisiko, falls diese Daten ausgespäht werden. Diese Daten sind verfahrensgemäß lediglich von der Sperrinstanz auslesbar, wenn dieser der Datenträger 10 zur Überprüfung vorgelegt wird. Anstelle des öffentlichen Schlüssels kann auch die Kennung der Zertifizierungsstelle, z.B. nach ISO/IEC 7816-4 die Herausgeberkennung (Issuer Identification), gespeichert werden.

Da die Sperrinstanz sowohl den öffentlichen Datenträgersektorschlüssel PKD$_{SEC}$ - aus der Datenbank - als auch sämtliche geheimen Sektorschlüssel SK$_{SEC;i}$ für alle ihr unterstellten Sektoren kennt, ist die Sperrinstanz in der Lage, einen Wert I$_{SEC;i}$, welcher zwischen dem Datenträger 10 und einer Terminaleinrichtung eines solchen Sektors in einer Sitzung i vereinbart worden ist, zu bestimmen. Auf diese Weise kann die Sperreinrichtung auf Basis der im Datenträger 10 gespeicherten Werte, d.h. der Basis g$_B$ sowie der öffentlichen Sektorschlüssel PK$_{SEC;i}$ für jede Sitzung i, die aktuell in dem Datenträger vorliegende Basis gs berechnen und somit validieren. Dazu ist es lediglich erforderlich, dem jeweiligen öffentlichen Sektorschlüssel PK$_{SEC;i}$ zur Sitzung i den entsprechenden Wert I$_{SEC;i}$ zu dieser Sitzung i zuzuordnen und schließlich die Berechnung der aktuellen Basis gs nachzuvollziehen, indem der Wert g$_B$ (ursprüngliches g1) mit dem Reziproken des Produkts der Werte I$_{SEC;i}$ zu den einzelnen Sitzungen exponentiert wird:

$$gs := g_B{}^\wedge(1/(\ I_{SEC;1} *I_{SEC;2} *I_{SEC;3}... *I_{SEC;n}).$$

Auf diese Weise kann die Sperrinstanz prüfen, ob der Datenträger 10 zur Ableitung der Basis gs tatsächlich den geheimen Datenträgersektorschlüssel SKD$_{SEC}$ in der vorgeschriebenen Weise verwendet hat. Wäre dies nicht der Fall, würde die im Datenträger aktuell vorliegende Basis von der durch die Sperrinstanz berechnete Basis gs abweichen. Ein gefälschter Datenträger 10, welcher nicht im Besitz des korrekten geheimen Datenträgersektorschlüssels SKD$_{SEC}$ ist, kann von der Sperrinstanz auf diese Weise eindeutig erkannt und anschließend gegebenenfalls gesperrt werden.

**Patentansprüche**

1.  Kryptographisches Verfahren zwischen einem portablen Datenträger (10) und einer Terminaleinrichtung unter Verwendung eines öffentlichen Datenträgerschlüssels (PKG) und eines geheimen Datenträgerschlüssels (SK1) des Datenträgers (10) sowie eines öffentlichen Terminalschlüssels ($PK_T$) und eines geheimen Terminalschlüssels ($SK_T$) der Terminaleinrichtung, wobei

der Datenträger (10) als öffentlichen Datenträgerschlüssel (PKG) einen statischen oder dynamisch erzeugten öffentlichen Schlüssel verwendet, und

die Terminaleinrichtung einen dem Datenträger (10) zugeordneten, von den Datenträgerschlüsseln verschiedenen Authentisierungsparameter (AP) prüft (TS61),

**dadurch gekennzeichnet, dass**

der Datenträger (10) als geheimen Datenträgerschlüssel (SK1) einen aus einem dem öffentlichen Datenträgerschlüssel (PKG) zugeordneten geheimen Grundschlüssel (SKG) abgeleiteten geheimen Datenträgerschlüssel (SK1) verwendet, wobei der öffentlichen Datenträgerschlüssel (PKG) und der geheime Grundschlüssel (SKG) ein Schlüsselpaar sind, und

der öffentliche Datenträgerschlüssel (PKG) mittels Exponentiation einer vorgegebenen Primitivwurzel (g) mit dem geheimen Grundschlüssel (SKG) bestimmt wird,

der geheime Datenträgerschlüssel (SK1) mittels Multiplikation des geheimen Grundschlüssels (SKG) mit einer ersten Zufallszahl (RND1) gebildet wird (TS31) und ein erster Basiswert (g1) mittels einer Exponentiation der Primitivwurzel (g) mit dem Reziproken der ersten Zufallszahl (RND1) gebildet wird (TS32),

wobei der Datenträger (10) den ersten Basiswert (g1) als einen Sitzungsparameter mittels des Authentisierungsparameters (AP) verschlüsselt oder digital signiert.

2. Verfahren nach Anspruch 1, **dadurch gekennzeichnet, dass** die Terminaleinrichtung den Authentisierungsparameter (AP1) dadurch prüft, dass die Terminaleinrichtung einen von dem Datenträger (10) bereitgestellten, mittels des Authentisierungsparameters (AP) verschlüsselten (TS41) Sitzungsparameter entschlüsselt (TS61).

3. Verfahren nach Anspruch 1, **dadurch gekennzeichnet, dass** die Terminaleinrichtung den Authentisierungsparameter (AP) dadurch prüft, dass die Terminaleinrichtung einen von dem Datenträger (10) bereitgestellten, mittels des Authentisierungsparameters (AP) digital signierten Sitzungsparameter verifiziert.

4. Verfahren nach einem der Ansprüche 1 bis 3, **dadurch gekennzeichnet, dass** vor einer weiteren Ausführung des kryptographischen Verfahrens der geheime Datenträgerschlüssel (SK1) des Datenträgers (10) durch einen aus dem geheimen Datenträgerschlüssel (SK1) abgeleiteten geheimen Datenträgersitzungsschlüssel (SKs) des Datenträgers (10) ersetzt wird (S10).

5. Verfahren nach einem der Ansprüche 1 bis 4, **dadurch gekennzeichnet, dass** mittels des öffentlichen Datenträgerschlüssels (PKG) und des geheimen Datenträgerschlüssels (SK1) des Datenträgers (10) sowie des öffentlichen Terminalschlüssels ($PK_T$) und des geheimen Terminalschlüssels ($SK_T$) der Terminaleinrichtung ein Kommunikationsschlüssel (KK) zwischen dem Datenträger (10) und der Terminaleinrichtung vereinbart wird (S7), vorzugsweise mittels eines Diffie-Hellman-Schlüsselaustauschverfahrens

6. Verfahren nach einem der Ansprüche 1 bis 5, **dadurch gekennzeichnet, dass** der Datenträger die erste Basis (g1) mittels des Authentisierungsparameters (AP) verschlüsselt (TS41) oder digital signiert und der Terminaleinrichtung in verschlüsselter oder digital signierter Form bereitstellt (TS42).

7. Verfahren nach Anspruch 6, **dadurch gekennzeichnet, dass** die Terminaleinrichtung auf Basis des Authentisierungsparameters die verschlüsselte erste Basis (g1) entschlüsselt (TS61) oder die digital signierte erste Basis (g1) verifiziert und den öffentlichen Terminalschlüssel ($PK_T$) der Terminaleinrichtung mittels Exponentiation der durch den Datenträger (10) als Sitzungsparameter bereitgestellten ersten Basis (g1) mit dem geheimen Terminalschlüssel ($SK_T$) der Terminaleinrichtung bestimmt (TS62).

8. Verfahren nach einem der Ansprüche 1 bis 7, **dadurch gekennzeichnet, dass** als öffentlicher Datenträgerschlüssel (PKG) des Datenträgers (10) ein statischer öffentlicher Schlüssel (PKG) verwendet wird, der durch die Terminaleinrichtung mittels eines Zertifikats ($C_{PKG}$) des statischen öffentlichen Schlüssels (PKG) verifiziert wird (S8).

9. Verfahren nach Anspruch 1, **dadurch gekennzeichnet, dass** der Datenträger (10) als öffentlichen Datenträgerschlüssel (PKG) einen pro Sitzung dynamisch erzeugten öffentlichen Schlüssel verwendet.

10. Verfahren nach Anspruch 9, **dadurch gekennzeichnet, dass** pro Sitzung dynamisch ein geheimer Grundschlüssel (SKG) erzeugt wird, wobei als dynamisch erzeugter öffentlicher Datenträgerschlüssel (PKG) ein öffentlicher Schlüssel verwendet wird, welcher mittels Exponentiation der vorgegebenen Primitivwurzel (g) mit dem dynamisch erzeugten geheimen Grundschlüssel (SKG) bestimmt wird.

11. Verfahren nach einem der Ansprüche 1 bis 10, **dadurch gekennzeichnet, dass** der öffentliche Datenträgerschlüssel (PKG) ein öffentlicher Gruppenschlüssel ist.

12. Portabler Datenträger (10), umfassend einen Prozessor (30), einen Speicher (40; 50; 60) und eine Datenkommunikationsschnittstelle (20; 20') zu einer Terminaleinrichtung sowie eine Kryptographieeinrichtung (52), welche eingerichtet ist, ein kryptographisches Verfahren mit einer Terminaleinrichtung unter Verwendung eines öffentlichen Datenträgerschlüssels (PKG) und eines geheimen Datenträgerschlüssels (SK1) des Datenträgers (10) sowie eines öffentlichen Terminalschlüssels ($PK_T$) und eines geheimen Terminalschlüssels ($SK_T$) der Terminaleinrichtung durchzuführen, **dadurch gekennzeichnet, dass**
der geheime Datenträgerschlüssel (SK1) von einem geheimen Grundschlüssel (SKG) abgeleitet ist, wobei der öffentlichen Datenträgerschlüssel (PKG) und der geheime Grundschlüssel (SKG) ein Schlüsselpaar sind, und
die Kryptographieeinrichtung (52) weiter eingerichtet ist, einen Sitzungsparameter des Verfahrens mittels eines von den Datenträgerschlüsseln verschiedenen Authentisierungsparameters (59; AP) zu verschlüsseln oder digital zu signieren,
wobei der öffentliche Datenträgerschlüssel (PKG) mittels Exponentiation einer vorgegebenen Primitivwurzel (g) mit dem geheimen Grundschlüssel (SKG) bestimmt ist,
der geheime Datenträgerschlüssel (SK1) mittels Multiplikation des geheimen Grundschlüssels (SKG) mit einer ersten Zufallszahl (RND1) gebildet ist (TS31) und ein erster Basiswert (g1) als Sitzungsschlüssel mittels einer Exponentiation der Primitivwurzel (g) mit dem Reziproken der ersten Zufallszahl (RND1) gebildet ist (TS32).

13. System, umfassend einen portablen Datenträger (10) nach Anspruch 12 sowie eine Terminaleinrichtung zur Datenkommunikation mit dem Datenträger (10), wobei die Terminaleinrichtung eingerichtet ist,
ein kryptographisches Verfahren mit dem Datenträger (10) unter Verwendung eines öffentlichen Datenträgerschlüssels (PKG) und eines geheimen Datenträgerschlüssels (SK1) des Datenträgers (10) sowie eines öffentlichen Terminalschlüssels ($PK_T$) und eines geheimen Terminalschlüssels ($SK_T$) der Terminaleinrichtung durchzuführen, und
einen dem Datenträger (10) zugeordneten, von den Datenträgerschlüsseln verschiedenen Authentisierungsparameter (59; AP) zu prüfen, wobei das System eingerichtet ist zum Durchführen eines Verfahrens nach einem der Ansprüche 1 bis 11.

**Claims**

1. A cryptographic method between a portable data carrier (10) and a terminal device while employing a public data-carrier key (PKG) and a secret data-carrier key (SK1) of the data carrier (10) as well as a public terminal key ($PK_T$) and a secret terminal key ($SK_T$) of the terminal device, wherein
the data carrier (10) employs as a public data-carrier key (PKG) a static or dynamically generated public key, and
the terminal device checks (TS61) an authentication parameter (AP) associated with the data carrier (10) and different from the data-carrier keys, **characterized in that**
the data carrier (10) employs as a secret data-carrier key (SK1) a secret data-carrier key (SK1) derived from a secret basic key (SKG) associated with the public data-carrier key (PKG), the public data-carrier key (PKG) and the secret basic key (SKG) being a key pair, and
the public data-carrier key (PKG) is determined by exponentiating a specified primitive root (g) by the secret basic key (SKG),
the secret data-carrier key (SK1) is formed (TS31) by multiplying the secret basic key (SKG) by a first random number (RND1), and a first base value (g1) is formed (TS32) by exponentiating the primitive root (g) by the reciprocal of the first random number (RND1),
wherein the data carrier (10) encrypts or digitally signs the first base value (g1) as a session parameter by means of the authentication parameter (AP).

2. The method according to claim 1, **characterized in that** the terminal device checks the authentication parameter (AP1) by the terminal device decrypting (TS61) a session parameter supplied by the data carrier (10) and encrypted (TS41) by means of the authentication parameter (AP).

3. The method according to claim 1, **characterized in that** the terminal device checks the authentication parameter (AP) by the terminal device verifying a session parameter supplied by the data carrier (10) and digitally signed by means of the authentication parameter (AP).

4. The method according to any of claims 1 to 3, **characterized in that** before a further execution of the cryptographic method the secret data-carrier key (SK1) of the data carrier (10) is replaced (S10) by a secret data-carrier session key (SK$_s$) of the data carrier (10) that is derived from the secret data-carrier key (SK1).

5. The method according to any of claims 1 to 4, **characterized in that** a communication key (KK) is agreed on (S7) between the data carrier (10) and the terminal device, preferably by means of a Diffie-Hellman key exchange method, by means of the public data-carrier key (PKG) and the secret data-carrier key (SK1) of the data carrier (10) as well as the public terminal key (PK$_T$) and the secret terminal key (SK$_T$) of the terminal device.

6. The method according to any of claims 1 to 5, **characterized in that** the data carrier encrypts (TS41) or digitally signs the first base (g1) by means of the authentication parameter (AP), and supplies (TS42) it to the terminal device in encrypted or digitally signed form.

7. The method according to claim 6, **characterized in that** the terminal device decrypts (TS61) the encrypted first base (g1) or verifies the digitally signed first base (g1) on the basis of the authentication parameter, and determines (TS62) the public terminal key (PK$_T$) of the terminal device by exponentiating the first base (g1) supplied by the data carrier (10) as a session parameter by the secret terminal key (SK$_T$) of the terminal device.

8. The method according to any of claims 1 to 7, **characterized in that** as a public data-carrier key (PKG) of the data carrier (10) a static public key (PKG) is employed, which is verified (S8) by the terminal device by means of a certificate (C$_{PKG}$) of the static public key (PKG).

9. The method according to claim 1, **characterized in that** the data carrier (10) employs as a public data-carrier key (PKG) a public key dynamically generated per session.

10. The method according to claim 9, **characterized in that** per session a secret basic key (SKG) is dynamically generated, there being employed as a dynamically generated public data-carrier key (PKG) a public key that is determined by exponentiating the specified primitive root (g) by the dynamically generated secret basic key (SKG).

11. The method according to any of claims 1 to 10, **characterized in that** the public data-carrier key (PKG) is a public group key.

12. A portable data carrier (10) comprising a processor (30), a memory (40; 50; 60) and a data communication interface (20; 20') to a terminal device as well as a cryptography device (52) which is adapted to carry out a cryptographic method with a terminal device while employing a public data-carrier key (PKG) and a secret data-carrier key (SK1) of the data carrier (10) as well as a public terminal key (PK$_T$) and a secret terminal key (SK$_T$) of the terminal device, **characterized in that**
the secret data-carrier key (SK1) is derived from a secret basic key (SKG), the public data-carrier key (PKG) and the secret basic key (SKG) being a key pair, and
the cryptographic device (52) is further adapted to encrypt or digitally sign a session parameter of the method by means of an authentication parameter (59; AP) different from the data-carrier keys,
wherein the public data-carrier key (PKG) is determined by exponentiating a specified primitive root (g) by the secret basic key (SKG),
the secret data-carrier key (SK1) is formed (TS31) by multiplying the secret basic key (SKG) by a first random number (RND1), and a first base value (g1) is formed (TS32) as a session key by exponentiating the primitive root (g) by the reciprocal of the first random number (RND1).

13. A system comprising a portable data carrier (10) according to claim 12 as well as a terminal device for data communication with the data carrier (10), wherein the terminal device is adapted,
to carry out a cryptographic method with the data carrier (10) while employing a public data-carrier key (PKG) and a secret data-carrier key (SK1) of the data carrier (10) as well as a public terminal key (PK$_T$) and a secret terminal key (SK$_T$) of the terminal device, and
to check an authentication parameter (59; AP) associated with the data carrier (10) and different from the data-carrier keys, the system being adapted to carry out a method according to any of claims 1 to 11.

**Revendications**

1. Procédé cryptographique entre un support de données (10) portable et un équipement terminal en utilisant une clé publique de support de données (PKG) et une clé secrète de support de données (SK1) du support de données (10) ainsi qu'une clé publique de terminal (PK$_T$) et une clé secrète de terminal (SK$_T$) de l'équipement terminal, cependant que

   le support de données (10) utilise comme clé publique de support de données (PKG) une clé publique statique ou générée dynamiquement, et

   l'équipement terminal vérifie (TS61) un paramètre d'authentification (AP) affecté au support de données (10) et différent des clés de support de données,

   **caractérisé en ce que**

   le support de données (10) utilise en tant que clé secrète de support de données (SK1) une clé secrète de support de données (SK1) dérivée d'une clé secrète de base (SKG) affectée à la clé publique de support de données (PKG), cependant que la clé publique de support de données (PKG) et la clé secrète de base (SKG) sont une paire de clés, et la clé publique de support de données (PKG) est déterminée par exponentiation d'une racine primitive (g) prédéterminée avec la clé secrète de base (SKG),

   la clé secrète de support de données (SK1) est constituée (TS31) par multiplication de la clé secrète de base (SKG) avec un premier nombre aléatoire (RND1), et une première valeur de base (g1) est constituée (TS32) par une exponentiation de la racine primitive (g) avec la réciproque du premier nombre aléatoire (RND1), cependant que le support de données (10), au moyen du paramètre d'authentification (AP), crypte ou signe numériquement la première valeur de base (g1) en tant qu'un paramètre de session.

2. Procédé selon la revendication 1, **caractérisé en ce que** l'équipement terminal vérifie le paramètre d'authentification (AP1) **en ce que** l'équipement terminal décrypte (TS61) un paramètre de session mis à disposition par le support de données (10) et crypté (TS41) au moyen du paramètre d'authentification (AP).

3. Procédé selon la revendication 1, **caractérisé en ce que** l'équipement terminal vérifie le paramètre d'authentification (AP) **en ce que** l'équipement terminal vérifie un paramètre de session mis à disposition par le support de données (10) et signé numériquement au moyen du paramètre d'authentification (AP).

4. Procédé selon une des revendications de 1 à 3, **caractérisé en ce que**, avant une autre exécution du procédé cryptographique, la clé secrète de support de données (SK1) du support de données (10) est remplacée (S10) par une clé secrète de session de support de données (Sk$_s$) du support de données (10) dérivée de la clé secrète de support de données (SK1).

5. Procédé selon une des revendications de 1 à 4, **caractérisé en ce que**, au moyen de la clé publique de support de données (PKG) et de la clé secrète de support de données (SK1) du support de données (10) ainsi que de la clé publique de terminal (PK$_T$) et de la clé secrète de terminal (SK$_T$) de l'équipement terminal, il est convenu (S7) d'une clé de communication (KK) entre le support de données (10) et l'équipement terminal, de préférence par un procédé d'échange de clés Diffie-Hellman.

6. Procédé selon une des revendications de 1 à 5, **caractérisé en ce que** le support de données crypte (TS41) ou signe numériquement la première base (g1) au moyen du paramètre d'authentification (AP) et la met à la disposition (TS42) de l'équipement terminal sous forme cryptée ou signée numériquement.

7. Procédé selon la revendication 6, **caractérisé en ce que** l'équipement terminal, sur la base du paramètre d'authentification, décrypte (TS61) la première base (g1) cryptée ou vérifie la première base (g1) signée numériquement et détermine (TS62) la clé publique de terminal (PK$_T$) de l'équipement terminal par exponentiation de la première base (g1), mise à disposition par le support de données (10) en tant que paramètre de session, avec la clé secrète de terminal (SK$_T$) de l'équipement terminal.

8. Procédé selon une des revendications de 1 à 7, **caractérisé en ce que**, comme clé publique de support de données (PKG) du support de données (10), une clé publique statique (PKG) est utilisée, laquelle est vérifiée (S8) par l'équipement terminal au moyen d'un certificat (C$_{PKG}$) de la clé publique statique (PKG).

9. Procédé selon la revendication 1, **caractérisé en ce que** le support de données (10) utilise comme clé publique de support de données (PKG) une clé publique générée dynamiquement par session.

**10.** Procédé selon la revendication 9, **caractérisé en ce que**, par session, une clé secrète de base (SKG) est générée dynamiquement, cependant que, comme clé publique de support de données (PKG) générée dynamiquement, une clé publique est utilisée, laquelle est déterminée par exponentiation de la racine primitive (g) prédéterminée avec la clé secrète de base (SKG) générée dynamiquement.

**11.** Procédé selon une des revendications de 1 à 10, **caractérisé en ce que** la clé publique de support de données (PKG) est une clé publique de groupe.

**12.** Support de données (10) portable doté d'un processeur (30), d'une mémoire (40; 50; 60) et d'une interface de communication de données (20; 20') vers un équipement terminal ainsi que d'un équipement de cryptographie (52) conçu pour effectuer un procédé cryptographique avec un équipement terminal en utilisant une clé publique de support de données (PKG) et une clé secrète de support de données (SK1) du support de données (10) ainsi qu'une clé publique de terminal ($PK_T$) et une clé secrète de terminal ($SK_T$) de l'équipement terminal, **caractérisée en ce que** la clé secrète de support de données (SK1) est dérivée d'une clé secrète de base (SKG), cependant que la clé publique de support de données (PKG) et la clé secrète de base (SKG) sont une paire de clés, et l'équipement de cryptographie (52) est en outre conçu pour crypter ou signer numériquement un paramètre de session du procédé au moyen d'un paramètre d'authentification (59; AP) différent des clés de support de données, cependant que la clé publique de support de données (PKG) est déterminée par exponentiation d'une racine primitive (g) prédéterminée avec la clé secrète de base (SKG), la clé secrète de support de données (SK1) est constituée (TS31) par multiplication de la clé secrète de base (SKG) avec un premier nombre aléatoire (RND1), et une première valeur de base (g1) est constituée (TS32) en tant que clé de session par une exponentiation de la racine primitive (g) avec la réciproque du premier nombre aléatoire (RND1).

**13.** Système comprenant un support de données (10) portable selon la revendication 12 ainsi qu'un équipement terminal pour la communication de données avec le support de données (10), cependant que l'équipement terminal est conçu pour effectuer un procédé cryptographique avec le support de données (10) en utilisant une clé publique de support de données (PKG) et une clé secrète de support de données (SK1) du support de données (10) ainsi qu'une clé publique de terminal ($PK_T$) et une clé secrète de terminal ($SK_T$) de l'équipement terminal, et pour vérifier un paramètre d'authentification (59; AP) affecté au support de données (10) et différent des clés de support de données, cependant que le système est conçu pour effectuer un procédé selon une des revendications de 1 à 11.

FIG 1

...

# FIG 2

Erzeugen des geheimen Grundschlüssels SKG und des öffentlichen Datenträgerschlüssels PKG — S1

Erzeugen des Zertifikats $C_{PKG}$ für PKG — S2

Für einen Datenträger: — S3

Ableiten des datenträgerinternen geheimen Datenträgerschlüssels $SK1 := SK \cdot RND1$ — TS31

Bestimmen einer Basis $g_1 := g^{1/RND1}$ — TS32

Erzeugen eines Authentisierungsparameters AP — TS33

Speichern von $SK1$, $PKG$, $g_1$, $C_{PKG}$ und AP im Datenträger — TS34

A

# FIG 3

(A)

Verschlüsseln der Basis $g_1$:
$Enc_{AP}(g_1) =: g'_1$  — TS41

— S4

Bereitstellen von $g'_1$, PKG und $C_{PKG}$
für Terminaleinrichtung  — TS42

Bereitstellen des AP
für Terminaleinrichtung  — S5

Entschlüsseln der Basis $g'_1$:
$g_1 = Dec_{AP}(g'_1)$  — TS61

— S6

Erzeugen eines geheimen Sitzungsschlüssels
$SK_T$ und eines öffentlichen Sitzungsschlüssels
$PK_T := g_1^{SK_T}$  — TS62

Vereinbaren eines geheimen
Kommunikationsschlüssels KK  — S7

Prüfung von $C_{PKG}$
durch Terminaleinrichtung  — S8

$\vdots$

# FIG 4

```
┌─────────────────────────────────────────────┐
│ Ableiten geheimer Datenträgersitzungsschlüssel: │        S9
│            SK_S: = SK1 · RND_S               │
└─────────────────────────────────────────────┘
```

$$SK_S: = SK1 \cdot RND_S$$

```
┌─────────────────────────────────────────────┐
│   Ersetzen des geheimen Datenträgerschlüssels │
│   durch den Datenträgersitzungsschlüssel      │        S10
│              SK1: = SK_S                      │
└─────────────────────────────────────────────┘
```

$$SK1: = SK_S$$

```
┌─────────────────────────────────────────────┐
│   Ableiten Sitzungsbasis g_S: = g_1^{1/RND_S} │        S11
└─────────────────────────────────────────────┘
```

$$g_S: = g_1^{1/RND_S}$$

```
┌─────────────────────────────────────────────┐
│        Ersetzen der ersten Basis durch die    │
│           Sitzungsbasis g_1: = g_S            │        S12
└─────────────────────────────────────────────┘
```

$$g_1: = g_S$$

**IN DER BESCHREIBUNG AUFGEFÜHRTE DOKUMENTE**

**In der Beschreibung aufgeführte Patentdokumente**

- US 20080022121 A1
- US 20080301461 A1